# EUROPEAN PATENT APPLICATION

(11) **EP 1 995 162 A2**
(43) Date of publication of application: **26.11.2008**
(21) Application number: 08155861.1
(22) Date of filing: 08.05.2008
(51) Int. Cl.: B62J 7/08

(54) **Bicycle accessory**

(30) Priority: 21.05.2007 FI 20070396
(71) Applicant: Hallapuro, Ismo, 85800 Haapajärvi (FI)
(72) Inventor: Hallapuro, Ismo, 85800 Haapajärvi (FI)
(74) Representative: Laitinen, Pauli Sakari

(57) **Abstract**

Accessory for a bicycle, particularly for supporting goods on the rear carrier of a bicycle, formed of an arm structure (8, 9) attached rotatably to the rear carrier (3) of the bicycle, and in which there is a means (11) at the end for hanging a plastic carrier bag or similar. The arm structure (8, 9) is mainly in two parts and adjustable in length.

## Description

The present invention relates to an accessory for a bicycle, more specifically an accessory to be installed, for example, on the rear carrier of a bicycle, to facilitate the transportation of a shopping bag.

Shopping bags, particularly plastic bags, are a handy means of carrying things when they are carried in the hand. However, a bag of this kind is quite a floppy carrying means, and it cannot be assumed that it will remain in shape, with the goods remaining inside it, unless the bag is supported from outside. Indeed it often happens that the contents of a plastic bag fall out of it, if it is placed, for example, in the boot of a car.

One very difficult and even dangerous means of transporting goods packed in a plastic bag is a bicycle. Even if the bicycle has a carrier at all, placing a plastic bag containing goods on the carrier is generally a hopeless task. The bag's floppy shape will not allow it to remain firmly in place, and will also be insufficient to protect the goods from tending to fall out of the bag.

For the aforementioned reasons, the plastic bag together with the goods in it is often placed to hang from the bicycle's handlebars, or from a hand that at the same time grips the handlebars. This means in turn that the movement of the bicycle becomes wobbly and dangerous, because the bag, which is often heavy, will easily cause an unmanageable swinging movement, which it is very difficult to control. This can easily lead to falling or moving into the line of traffic, which can be dangerous.

The present invention is intended to create an accessory, with the aid of which the aforementioned drawbacks can be avoided in a simple and functional manner.

The aforementioned and other advantages and benefits of the invention are achieved by using the accessory, the characteristic features of which are stated in the accompanying Claims.

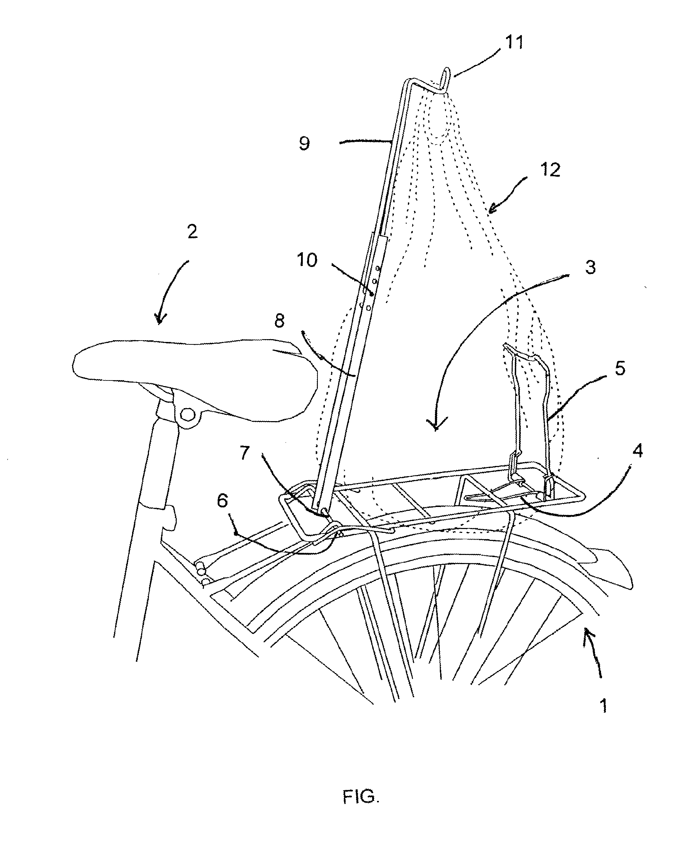

In the following, the invention is described in greater detail with reference to the accompanying figure, which shows one functional embodiment of the invention.

As stated, the figure shows one functional embodiment of the invention, seen at an angle.

The figure shows the rear part of a bicycle, in which there is a rear wheel 1, a saddle 2, and a rear carrier 3. The rear carrier is formed conventionally from bar-like components, which are secured in a suitable manner to each other and to the frame structures of the bicycle. The rear carrier usually includes at least one spring-loaded 4 clamp 5, which can be set to support goods placed on the rear carrier.

An essentially transverse shaft 7 is attached to the rear carrier 3 with the aid of suitable attachments 6, and has attached to it a rotatably pivoted arm, which in this embodiment is formed of two parts 8 and 9, which can be used to be adjusted to totalities of different lengths to a limited extent. In this embodiment, this is achieved with the aid of holes 10 and the lower ends of the upper arm part 9, which are bent to the side. The attachment can be moved to a suitable pair of holes, in order to create a suitable length of arm.

At the upper end of the arm 8, 9, there is a hook-like component 11, on which a plastic carrier bag can be hung. The plastic bag is shown by broken lines and the reference number 12. The plastic bag is placed on top of the rear carrier, supported by the hook-like component 11, and pressed between the clamp 5 and the arm by the force of the spring.

As can be easily concluded from the figure, the accessory according to the invention can be easily folded onto the rear carrier when not in use, for example, in such a way that the upper part 9 is folded into the profile of the lower part 8, which in this case is U-shaped, and the totality is lowered onto the carrier. The arm 8, 9 can be set on the carrier, in such a way that the spring-loaded clamp 5 rests on top of the arm, so that it remains firmly in place.

In the embodiment shown, the shaft 7 is supported in place by means of springs 6, which press the shaft 7 tightly against the bars of the rear carrier. It is obvious, however, that the shaft 7 can be secured in place in the most diverse ways. The shaft 7 can be permanently attached in place with the arm 8, 9 and rotate in the attachments, but the shaft can also be permanently attached to the rear carrier and the arm can rotate relative to it.

It is obvious that the arm structure described is only one alternative of many. However, it is easy to make and also easy to use. The lengthening and shortening can be performed in many ways as, for example, disclosed in other fields of technology.

Practical tests have shown the embodiment described above to be very functional. The bag remains firmly in place and the bicycle can be ridden stably and safely.

## Claims

1. Accessory for a bicycle, particularly for supporting goods on the rear carrier of a bicycle, comprising an arm structure, at the end of which is a means (11) for hanging a plastic carrier bag or similar, **characterized in that** the arm structure (8, 9) is attached rotatably in the longitudinal direction to the rear carrier (3) of the bicycle, and which arm structure (8, 9) is in two parts and adjustable in length.

2. Accessory according to Claim 1, **characterized in that** one part (8) of the arm structure is equipped with holes (10), into the desired holes of which the ends of the other part (9) can be set, in order to adjust the length of the arm.

3. Accessory according to Claim 1 or 2, **characterized** that the free end of the arm is equipped with a hook-like suspension means (11).

4. Accessory according to any of the above Claims, **characterized in that** the arm structure (8, 9) is set rotatably on a shaft (7).

5. Accessory according to any of the above Claims, **characterized in that** the arm structure can be adjusted to about half its length and can be rotated essentially along the upper surface of the rear carrier and, if desired, can be placed under the spring-loaded clamp (5) of the rear carrier.

6. Accessory according to Claim 5, **characterized in that** the arm structure can be adjusted by folding.
